# EUROPÄISCHE PATENTSCHRIFT

(11) **EP 0 861 489 B1**
(45) Veröffentlichungstag und Bekanntmachung des Hinweises auf die Patenterteilung: **28.07.1999**
(21) Anmeldenummer: 96945859.5
(22) Anmeldetag: 02.11.1996
(51) Int. Cl.: G11B 17/00

(54) **SCHUBLADE ZUM BE- UND ENTLADEN EINES PLATTENWECHSLERGERÄTES MIT EINER PLATTE**
DRAWER FOR LOADING AND UNLOADING A DISK CHANGING DEVICE WITH A DISK
TIROIR POUR CHARGER ET DECHARGER UN DISQUE DANS UN CHANGEUR DE DISQUE

(30) Priorität: 15.11.1995 DE 19542484; 17.01.1996 DE 19601503
(43) Veröffentlichungstag der Anmeldung: 02.09.1998
(73) Patentinhaber: NSM AKTIENGESELLSCHAFT, 55411 Bingen (DE)
(72) Erfinder: MENKE, Wilhelm, D-55411 Bingen (DE); HEIDERSBERGER, Börge, D-55411 Bingen (DE); STÜHLER, Rolf, D-65206 Wiesbaden (DE)
(74) Vertreter: Becker, Bernd, Dipl.-Ing.
(86) Internationale Anmeldenummer: DE9602103
(87) Internationale Veröffentlichungsnummer: WO9718552

(56) Entgegenhaltungen:
- EP-A- 0 439 853
- WO-A-95/07531
- DE-A- 3 922 721
- US-A- 4 710 910
- PATENT ABSTRACTS OF JAPAN vol. 095, no. 006, 31.Juli 1995 & JP 07 057364 A (FUNAI ELECTRIC CO LTD), 3.März 1995,

## Beschreibung

Die Erfindung bezieht sich auf eine Schublade zum Be- und Entladen eines Plattenwechslergerätes mit einer Platte, insbesondere für Compact-Disk, aufweisend ein im Gehäuse des Plattenwechslergerätes befestigtes Bodenteil, ein am Bodenteil durch eine Ver- und Entriegelungseinrichtung ein- und ausfahrbares Aufnahmefach und einen im Aufnahmefach gehalterten, auswechselbaren Plattenhalter zum Aufnehmen der Platte.

Plattenwechslergeräte dieser Art sind in unterschiedlichen Ausfürhrungsformen bekannt. So wird beispielweise in der DE 3 922 721 A1 ein Plattenabspielgerät offenbart, bei dem zwei Plattenmagazine, die jeweils eine Vielzahl übereinanderliegend angeordneter Aufnahmefächer für die Lagerung einer entsprechenden Anzahl an je eine Platte aufnehmender Plattenhalterungen besitzen und seitlich in einem Gehäuse gegenüberliegend angeordnet sind. In dem Raum zwischen den Plattenmagazinen befindet sich eine auf- und abverfahrbare Transporteinrichtung zur Hin- und Herbeförderung einer gewünschten Platte mit dem zugehörigen Plattenhalter zwischen dem Aufnahmefach und einer Abspieleinheit.

Häufig sind Plattenwechslergeräte bzw. Plattenabspielgeräte mit einem Lade-Schubfach versehen. Die WO-A-95/07531 offenbart ein Wiedergabe- und Aufzeichnungsgerät für Platten mit einem in übereinanderliegenden Aufnahmefächern Plattenhalter mit Platten aufnehmenden Plattenmagazinen, mindestens zwei Laufwerken zum Auslesen oder Einschreiben von Informationen von der bzw. auf die Platte und einer in Stapelrichtung des Plattenmagazins verfahrbaren Transporteinrichtung zur wahlweisen Beförderung der einzelnen Platte mit dem Plattenhalter zwischen beliebigen Aufnahmefächern und den Laufwerken. Im Turm der Laufwerke ist ein ein Plattenhalter mit einer Platte aufnehmendes Lade-Schubfach integriert. Dieses Lade-Schubfach nimmt einen mit einer Platte bestückten Plattenhalter auf, der im eingefahrenen Zustand des Lade-Schubfaches von der Transporteinrichtung erfaßt werden kann. Im ausgefahrenen Zustand des Lade-Schubfaches kann eine Platte leicht von Hand ausgewechselt werden.

Ein Plattenabspielgerät mit einer solchen ein- und ausfahrbaren Schublade ist auch aus der EP 0 439 483 B1 bekannt. Oftmals sind derartige Geräte so ausgestaltet, daß einerseits im ausgefahrenen Zustand der Schublade die Platte leicht ausgewechselt werden kann, andererseits aber ein unerwünschtes Verschieben des Plattenhalters möglich ist. Eine Verschiebung des Plattenhalters soll jedoch nur im eingefahrenen Zustand der Schublade möglich sein, um ein Auswechseln des die Platte aufnehmenden Plattenhalters im Plattenwechslergerät, beispielsweise von einem Aufnahmefach in ein anderes Aufnahmefach eines Plattenmagazins oder von einem Plattenmagazin zu einem anderen Plattenmagazin, zu gewährleisten.

Weiterhin ist aus der US-PS 4,710,910 in Ein- und Ausgabesystem für Platten eines Compact-Disk-Plattenwechslergerätes mit einem schubladenartigen Plattenträger bekannt. Dieser wird durch Ver- und Entriegelungseinrichtungen allerdings nur in einer Endstellung festgehalten, weil die Ver- und Entriegelungseinrichtungen nicht am Aufnahmefach für den Plattenträger befestigt sind sondern an dessen Seitenwänden.

Es ist daher Aufgabe der Erfindung, eine Schublade der eingangs genannten Art derart auszugestalten, daß ein Verschieben des Plattenhalters innerhalb der Schublade im ausgefahrenen Zustand der Schublade verhindert wird. Dabei soll ein Verschieben des Plattenhalters bereits bei Beginn des Öffnungsvorganges der Schublade verhindert werden.

Erfindungsgemäß wird die Aufgabe dadurch gelöst, daß die Ver- und Entriegelungseinrichtung am Aufnahmefach im wesentlichen vertikal schwenkbar vom Bodenteil betätigbar ist und mit Rastelementen zum Eingriff mit dem Bodenteil im eingefahrenen Zustand des Aufnahmefaches und zum Eingriff mit dem Plattenhalter beim Ausfahren des Aufnahmefaches versehen ist.

Zweckmäßigerweise weist dazu das Bodenteil eine Öffnung im der Ausfahrrichtung des Aufnahmefaches entgegengesetzten Randbereich auf, in die das entsprechende Rastelement im eingefahrenen Zustand des Aufnahmefaches eingreift.

In weiterer Ausbildung der Erfindung umfaßt die Ver- und Entriegelungseinrichtung einen an der Unterseite des Aufnahmefaches in einer quer zu dessen Ausfahrrichtung gelagerten Schwenkachse beweglichen Arretierhebel. Der Arretierhebel ist sonach um diese Schwenkachse im wesentlichen vertikal verschwenkbar.

Nach einer vorteilhaften Weiterbildung der erfindungsgemäßen Schublade weist der Arretierhebel auf seiner Oberseite das dem Plattenhalter zugeordnete Rastelement auf, das aufwärts gerichtet ist und beim Ausfahren des Aufnahmefaches die der Ausfahrrichtung entgegengesetzten Randbereiche des Aufnahmefaches und des Plattenhalters hintergreift.

Weiterhin weist bevorzugt der Arretierhebel auf seiner Unterseite das der Öffnung im Bodenteil zugeordnete Raselement auf, das dem aufwärts gerichteten Rastelement entgegengesetzt gerichtet und konisch verjüngend ausgebildet ist, wobei das Rastelement im eingefahrenen Zustand des Aufnahmefaches mit der Öffnung im Bodenteil in ist und beim Ausfahren des Aufnahmefaches zunächst aus der Öffnung herausgleitet und dann auf dem Bodenteil entlanggleitet. Durch die konisch verjüngende Form des Rastelementes ergibt sich ein selbsttätiges vertikales Verschwenken des Arretierhebels beim Ein- bzw. Ausfahren der Schublade, wobei das Rastelement mit der Öffnung im Bodenteil in bzw. außer Eingriff gelangt.

Bei einer weiteren Ausgestaltung der erfindungsgemäßen Schublade weist der Arretierhebel auf seiner Oberseite ein dem Rastelement, das dem Plattenhalter zugeordnet ist, benachbartes, in Ausfahrrichtung des Aufnahmefaches angeordnetes, weiteres aufwärts gerichtetes Rastelement auf, das der Platte im Plattenhalter zugeordnet ist. Dabei kommt bevorzugt das weitere Rastelement beim Ausfahren des Aufnahmefaches mit einer dazu korrespondierenden Öffnung im Aufnahmefach und einer dazu korrespondierenden Ausnehmung im Rand einer eine Platte aufnehmenden Vertiefung des Plattenhalters in Eingriff. Dadurch erfolgt eine Sicherung der Platte im Plattenhalter gegen ein Verschieben derselben beim Ausfahren des Aufnahmefaches entgegen der Ausfahrrichtung des Aufnahmefaches, d.h. die Platte kann nicht über den Plattenhalter in das Gehäuse des Plattenwechslergerätes geschoben werden. Hierbei steht selbstverständlich das weitere Rastelement soweit über den Plattenhalter vor, daß die Aufnahmeöffnung für das Aufnahmefach im Gehäuse des Plattenwechslergerätes in diesem Bereich verschlossen ist.

Zweckmäßigerweise sind die Rastelemente einstückig an dem Arretierhebel angeformt. Dies führt zu einer fertigungstechnisch einfachen Herstellung.

Um ein stets zuverlässiges, selbsttätiges, Verschwenken des Arretierhebels beim Ein- und Ausfahren der Schublade sicherzustellen, ist bevorzugt der Arretierhebel in Richtung des Bodenteils mit einer Druckfeder belastet..

Durch die Erfindung wird eine Schublade für ein Plattenwechslergerät zur Verfügung gestellt, bei der ein Verschieben der Platte und des Plattenhalters im ausgefahrenen Zustand der Schublade bereits bei Beginn des Öffnungsvorganges verhindert wird.

Der der Erfindung zugrundeliegende Gedanke wird in der nachfolgenden Beschreibung anhand eines Ausführungsbeispieles, das in der Zeichnung dargestellt ist, näher erläutert. Es zeigt:
- Fig. 1:: eine Draufsicht auf die erfindungsgemäße Schublade im eingefahrenen Zustand;
- Fig. 2:: eine Draufsicht auf die Schublade im ausgefahrenen Zustand gemäß Fig. 1;
- Fig. 3:: eine Seitenansicht der Schublade im Schnitt im eingefahrenen Zustand gemäß Fig. 1; und
- Fig. 4:: eine Seitenansicht der Schublade im Schnitt im ausgefahrenen Zustand gemäß Fig. 2.

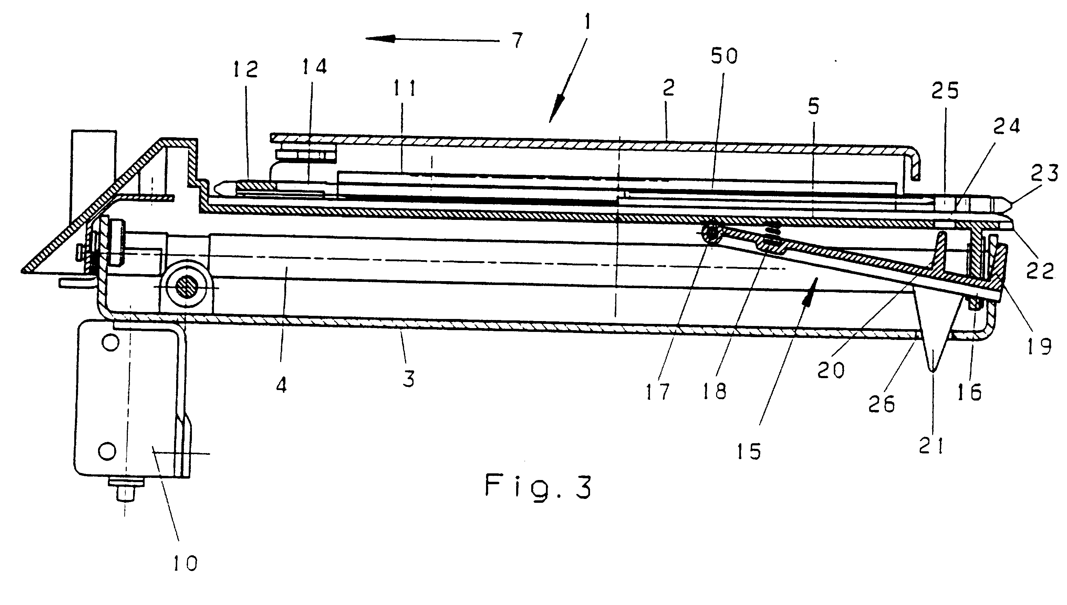

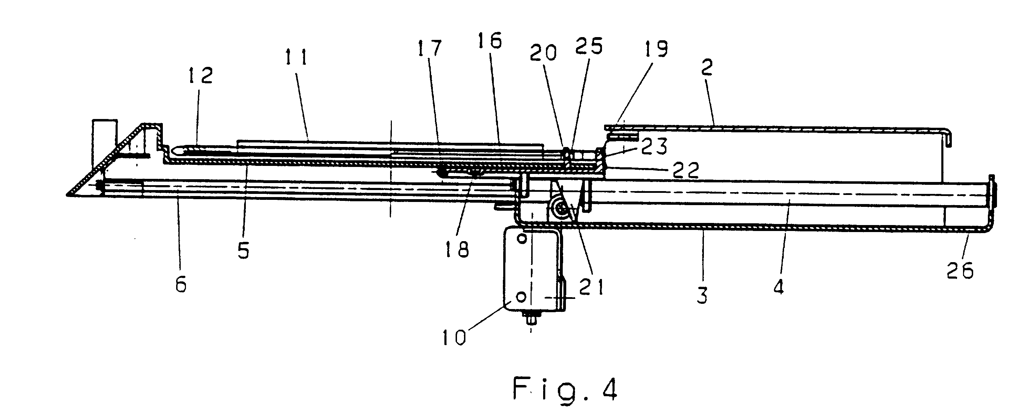

Ein zur Schublade 1 gehörendes Bodenteil 3 ist am Gehäuse 2 des Plattenwechslergerätes befestigt. In den Fig. 3 und 4 ist dieses Gehäuse 2 nur teilweise dargestellt. Das Bodenteil 3 umfaßt zwei parallel zueinander verlaufende Führungsstangen 4. Die Schublade 1 weist ein Aufnahmefach 5 auf, welches zwei parallel zueinander verlaufende Führungsstäbe 6 besitzt, die einen geringeren Durchmesser aufweisen als die Führungsstangen 4 des Bodenteils 3. Mittels der Führungsstäbe 6 wird das Aufnahmefach 5 in den Führungsstangen 4 des Bodenteils 3 beweglich gehaltert, so daß das Aufnahmefach 5 in Ausfahrrichtung, dargestellt durch den Pfeil 7, aus dem am Gehäuse 2 des Plattenwechslergerätes befestigten Bodenteil 3 aus- und eingefahren werden kann.

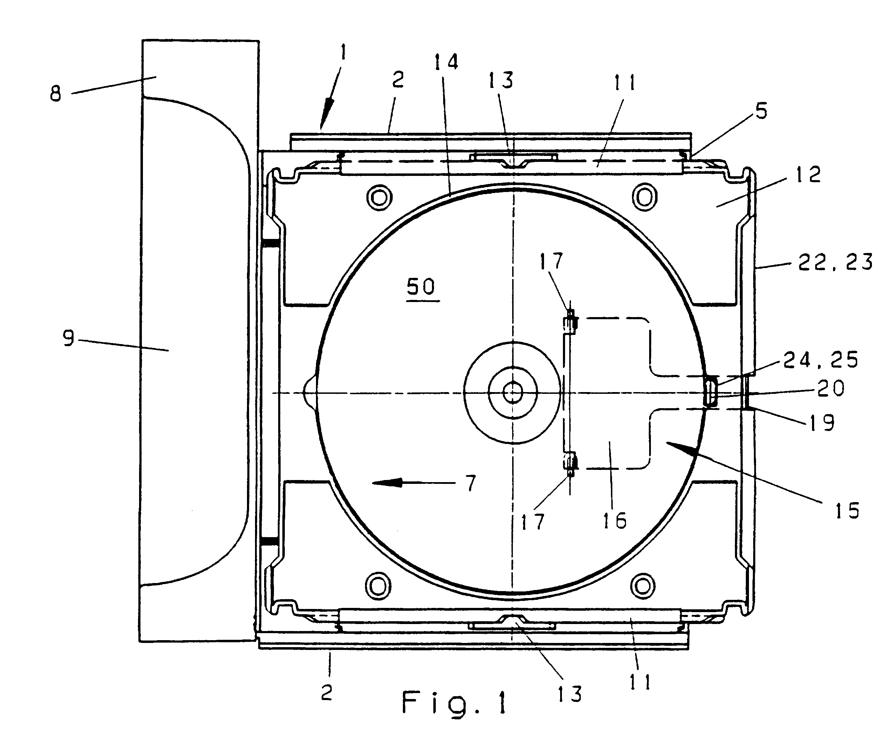

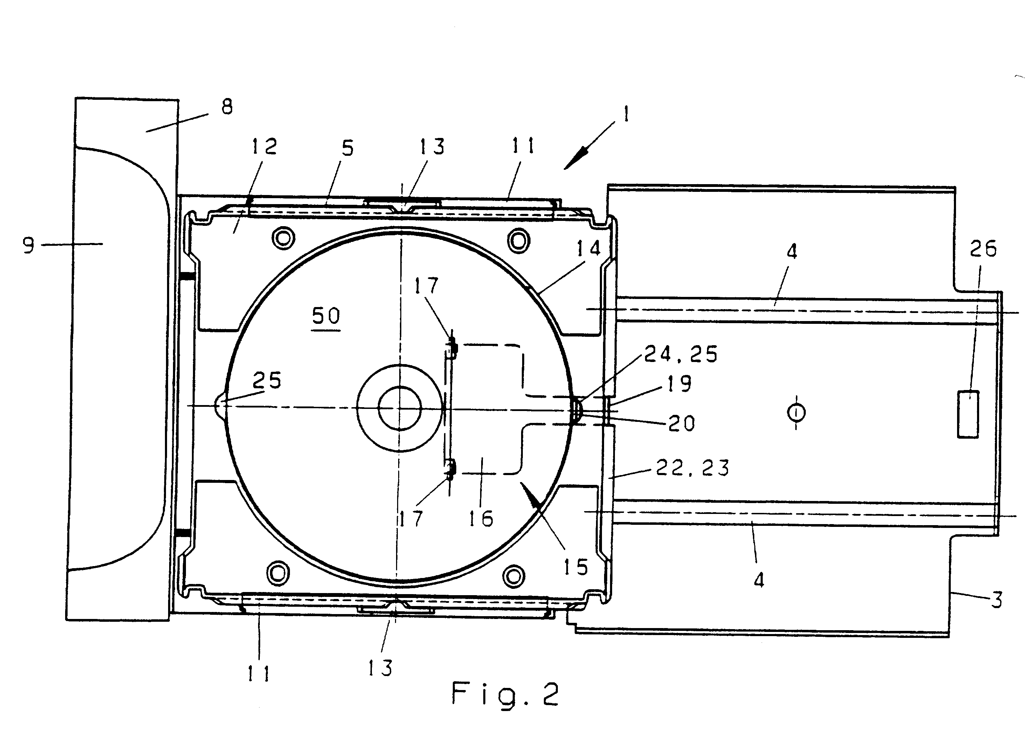

Um die Schublade 1 betätigen zu können, ist an der Vorderseite des Aufnahmefaches 5 ein Griffstück 8 mit einer entsprechenden Griffmulde 9, dargestellt in den Fig. 1 und 2, angebracht. Unterhalb des Bodenteils 3 ist eine elektromechanisch betätigbare Arretiereinrichtung 10 angeordnet, mit der das Aufnahmefach 5 der Schublade 1 im eingefahrenen Zustand der Schublade arretiert oder das Aufnahmefach 5 der Schublade 1 entriegelt wird, um aus der Schublade 1 ausfahren zu können.

Das Aufnahmefach 5 weist an seinen Seiten zwei sich gegenüberliegende Führungsschienen 11 auf, in die ein Plattenhalter 12 einschiebbar ist. Durch entsprechende Lagesicherungselemente 13 wird der Plattenhalter 12 in seiner Aufnahmelage lösbar arretiert. Beim Ein- oder Ausschieben des Plattenhalters 12 aus den Führungsschienen 11 des Aufnahmefaches 5 ist nur ein geringer Widerstand zu überwinden, da die Lagesicherungselemente 13 federelastisch ausgebildet sind. Durch diese Lagesicherungselemente 13 erfolgt eine gewisse leichte Arretierung des Plattenhalters 12 in jeder Stellung der Schublade 1. In einer mit einer Durchbrechung versehenen Vertiefung 14 des Plattenhalters 12 ist eine Platte 50, vorzugsweise eine Compakt-Disk, eingelegt.

An der Unterseite des Aufnahmefaches 5 ist, wie aus Fig. 3 ersichtlich, eine Ver- und Entriegelungseinrichtung 15 angeordnet. Diese Ver- und Entriegelungseinrichtung 15 besteht aus einem Arretierhebel 16, der an seinem einen Ende an einer quer zur Ausfahrrichtung 7 der Schublade 1 angeordneten Schwenkachse 17 schwenkbeweglich, im wesentlichen in vertikaler Richtung, gelagert ist. Mittels einer Druckfeder 18 ist der Arretierhebel 16 gegen das Bodenteil 3 federelastisch ausgebildet.

In seinem vorderen Bereich weist der Arretierhebel 16 mehrere Rastelemente auf. Ein erstes Rastelement 19 ist am vorderen Ende des Arretierhebels 16 auf dessen Oberseite aufwärts gerichtet ausgebildet. An der Unterseite des Arretierhebels 16 ist im vorderen Bereich ein zweites Rastelement 21 vorgesehen, das konisch verjüngt ausgeführt ist. Weiterhin ist beabstandet zu dem ersten Rastelement 19 ist in Richtung der Schwenkachse 17 auf der Oberseite des Arretierhebels 16 ein drittes, aufwärts gerichtetes Rastelement 20 ausgebildet, so daß die Rastelemente 19 und 20 gewissermaßen eine Zangenform bilden.

Das erste Rastelement 19 ist zum Eingriff mit dem entgegengesetzt zur Ausfahrrichtung 7 der Schublade 1 befindlichen Randbereich 23 des Plattenhalters 12 vorgesehen. Hierbei erstreckt sich das Rastelement 19 über einen entsprechenden Randbereich 22 des Aufnahmefaches 5 Das zweite Rastelement 21 hingegen ist zum Eingriff in eine im Bodenteil 3 angeordnete Öffnung 26 vorgesehen. Das dritte Rastelement 20 kann über eine dazu korrespondierende Öffnung 24 im Aufnahmefach 5 und über eine dazu korrespondierende Ausnehmung 25 im Rand einer eine Platte (50) aufnehmenden Vertiefung 14 des Plattenhalters 12 mit dem Randbereich der Platte 50 in Eingriff gebracht werden. Der Plattenhalter 26 besitzt zwei, in Ausfahrrichtung 7 sich gegenüberliegende Ausnehmungen 25, da der Plattenhalter 12 auch um 180° gedreht in das Aufnahmefach 5 eingesetzt werden kann.

Im eingefahrenen Zustand der Schublade 1 gemäß den Fig. 1 und 3 ist die Schublade 1 durch die Arretiereinrichtung 10 für das Aufnahmefach 5 verriegelt. Dadurch greift das an der Unterseite des Arretierhebels 16 angeordnete, sich konisch verjüngende Rastelement 21, bedingt durch die Druckfeder 18, in die Öffnung 26 des Bodenteils 3 der Schublade 1 ein. Die Rastelemente 19 und 20 befinden sich dabei außer Eingriff mit den Randbereichen 22 und 23 des Aufnahmefaches 5 und des Plattenhalters 12 sowie mit der Öffnung 24 des Aufnahmefaches 5 und der Ausnehmung 25 im Plattenhalter 12. In diesem eingefahrenen Zustand ist der Plattenhalter 12 in Richtung Innenraum des Gehäuses 2 des Plattenwechslergerätes entnehmbar, da dieser nicht durch den Arretierhebel 16 blockiert ist.

Gibt die Arretiereinrichtung 10 das Aufnahmefach 5 der Schublade 1 frei, bewegt sich das Aufnahmefach 5 in Ausfahrrichtung 7 der Schublade 1, wie es in den Fig. 2 und 4 ersichtlich ist. Durch die konische Ausbildung des an der Unterseite des Arretierhebels 16 angebrachten Rastelementes 21 gleitet dieses gegen den Widerstand der Druckfeder 18 aus der Öffnung 26 des Bodenteils 3 heraus, wobei gleichzeitig der Arretierhebel 16 unmittelbar bei Beginn des Öffnungs- bzw. Ausfahrvorganges der Schublade 1 um seine Schwenkachse 17 aufwärts bewegt wird. Dadurch greifen die Rastelemente 19 und 20 an den entsprechenden Randbereich 22 oder eine Ausnehmung des Aufnahmefaches 5 und des Randbereiches 23 des Plattenhalters 12 an, während das Rastelement 19 in die Öffnung 24 des Aufnahmefaches 5 und in die Ausnehmung 25 des Plattenhalters 12 eingreift. Somit ist schon bei Beginn des Ausfahrvorganges der Schublade 1 gewährleistet, daß der Plattenhalter 12 im Aufnahmefach 5 der Schublade 1 in keiner Richtung verschoben werden kann, wobei gleichzeitig eine Verschiebung der Platte entgegen der Ausfahrrichtung verhindert ist.

Da das Rastelement 21 auf der Innenseite des Bodenteils 3 entlanggleitet, während der Ausfahrvorgang ausgeführt und beendet wird, wird der Arretierhebel 16 aufwärts geschwenkt und der Eingriff der Rastelemente 19 und 20 in das Aufnahmefach 5 und den Plattenhalter 12 beibehalten. Erst wenn die Schublade 1 geschlossen ist, gelangen die Rastelemente 19 und 20 außer Eingriff mit dem Aufnahmefach 5 und dem Plattenhalter 12, und zwar dann, wenn das Rastelement 21 an der Unterseite des Arretierhebels 16 in die Öffnung 26 des Bodenteils 3 gleitet.

## Patentansprüche

1. Schlublade zum Be- und Entladen eines Plattenwechslergerätes mit einer Platte (50), insbesonder für Compact-Disk, aufweisend
- ein im Gehäuse (2) des Plattenwechslergerätes befestigtes Bodenteil (3),
- ein am Bodenteil (3) durch eine Ver- und Entriegelungseinrichtung (15) ein- und ausfahrbares Aufnahmefach (5) und
- einen im Aufnahmefach (6) gehalterten auswechselbaren Plattenhalter (12) zum Aufnehmen der Platte (50),
dadurch gekennzeichnet,
daß die Ver- und Entriegelungseinrichtung (15) am Aufnahmefach (5) im wesentlichen vertikal schwenkbar vom Bodenteil (3) betätigbar ist und mit Rastelementen (21, 19) zum Eingriff mit dem Bodenteil (3) eingefahrenen Zustand des Aufnahmefaches (5) und zum Eingriff mit dem Plattenhalter (12) beim Ausfahren des Aufnhamefaches (5) versehen ist.

2. Schlublade nach Anspruch 1, dadurch gekennzeichnet, daß das Bodenteil (3) eine Öffnung (26) im der Ausfahrrichtung (7) des Aufnahmefaches (5) entgegengesetzten Randbereich aufweist, in die das entsprechende Rastelement (21) im eingefahrenen Zustand des Aufnahmefaches (5) eingreift.

3. Schublade nach den Ansprüchen 1 und 2, dadurch gekennzeichnet, daß die Ver- und Entriegelungseinrichtung (15) einen an der Unterseite des Aufnahmefaches (5) in einer quer zu dessen Ausfahrrichtung (7) gelagerten Schwenkachse (17) beweglichen Arretierhebel (16) umfaßt.

4. Schublade nach Anspruch 3, dadurch gekennzeichnet, daß der Arretierhebel (16) auf seiner Oberseite das dem Plattenhalter (12) zugeordnete Rastelement (19) aufweist, das aufwärts gerichtet ist und beim Ausfahren des Aufnahmefaches (5) die der Ausfahrrichtung (7) entgegengesetzten Randbereiche (22, 23) des Aufnahmefaches (5) und des Plattenhalters (12) hintergreift.

5. Schublade den Ansprüchen 3 und 4, dadurch gekennzeichnet, daß der Arretierhebel (16) auf seiner Unterseite das der Öffnung im Bodenteil zugeordnete Rastelement (21) aufweist, das dem aufwärts gerichteten Rastelement (19) entgegengesetzt gerichtet und konisch verjüngend ausgebildet ist, wobei das Rastelement (21) im eingefahrenen Zustand des Aufnahmefaches (5) mit der Öffnung (26) im Bodenteil (3) in Eingriff ist und beim Ausfahren des Aufnahmefaches (5) zunächst aus der Öffnung (26) herausgleitet und dann auf dem Bodenteil (3) entlang gleitet.

6. Schublade nach einem der Ansprüche 3 bis 5, dadurch gekennzeichnet, daß der Arretierhebel (16) auf seiner Oberseite ein dem Rastelement (19, das dem Plattenhalter (12) zugeordnet ist, benachbartes, in Ausfahrrichtung (7) des Aufnahmefaches (5) angeordnetes, weiteres aufwärts gerichtetes Rastelement (20) aufweist, das der Platte (50) im Plattenhalter (12) zugeordnet ist.

7. Schublade nach Anspruch 6, dadurch gekennzeichnet, daß das weitere Rastelement (20) beim Ausfahren des Aufnahmefaches (5) mit einer dazu korrespondierenden Öffnung (24) im Aufnahmefach (5) und einer dazu korrespondierenden Ausnehmung (25) im Rand einer eine Platte (50) aufnehmenden Vertiefung (14) des Plattenhalters (12) in Eingriff kommt.

8. Schublade nach einem der Ansprüche 3 bis 7, dadurch gekennzeichnet, daß die Rastelemente (19, 20, 21) einstükkig an dem Arreiterhebel (16) angeformt sind.

9. Schublade nach mindestens einem der Ansprüche 1 bis 9, dadurch gekennzeichnet, daß der Arretierhebel (16) in Richtung des Bodenteils (3) mit einer Druckfeder (18) belastet ist.

## Claims

1. Drawer for loading a disc (50) into a disc changing apparatus, and for unloading such therefrom, more especially for compact discs, including
- a base member (3), which is secured in the housing (2) of the disc changing apparatus,
- an accommodation compartment (5), which is retractable and extendable on the base member (3) by means of a locking and unlocking arrangement (15), and
- an interchangeable disc holder (12), which is mounted in the accommodation compartment (5), for picking-up the disc (50),
characterised in that the locking and unlocking arrangement (15) is actuatable by the base member (3) so as to be substantially vertically pivotable on the accommodation compartment (5) and is provided with locking members (21, 19) for engagement with the base member (3) when the accommodation compartment (5) is in its retracted position and for engagement with the disc holder (12) when the accommodation compartment (5) is moved outwardly.

2. Drawer according to claim 1, characterised in that the base member (3) has an aperture (26) in the edge region opposed to the outward direction (7) of the accommodation compartment (5), the corresponding locking member (21) engaging in said aperture when the accommodation compartment (5) is in its retracted position.

3. Drawer according to claims 1 and 2, characterised in that the locking and unlocking arrangement (15) includes a blocking lever (16), which is displaceable on the underside of the accommodation compartment (5) on a fulcrum (17) mounted at right angles relative to the outward direction (7) of said compartment.

4. Drawer according to claim 3, characterised in that the blocking lever (16) has, on its upper side, the locking member (19) associated with the disc holder (12), said locking member being upwardly orientated and engaging behind the edge regions (22, 23) of the accommodation compartment (5) and of the disc holder (12) during the outward movement of the accommodation compartment (5), which regions are opposed to the outward direction (7).

5. Drawer according to claims 3 and 4, characterised in that the blocking lever (16) has, on its underside, the locking member (21) associated with the aperture in the base member, said locking member being orientated in a direction opposed to the upwardly orientated locking member (19) and having a conically tapering configuration, the locking member (21) engaging with the aperture (26) in the base member (3) when the accommodation compartment (5) is in its retracted position, said locking member (21) sliding initially from the aperture (26) and then along the base member (3) during the outward movement of the accommodation compartment (5).

6. Drawer according to one of claims 3 to 5, characterised in that the blocking lever (16) has, on its upper side, an additional upwardly orientated locking member (20), which lies adjacent the locking member (19) associated with the disc holder (12), said additional locking member being disposed in the outward direction (7) of the accommodation compartment (5) and being associated with the disc (50) in the disc holder (12).

7. Drawer according to claim 6, characterised in that, during the outward movement of the accommodation compartment (5), the additional locking member (20) engages with an aperture (24) in the accommodation compartment (5) corresponding thereto and with a cutaway portion (25) in the edge of a recess (14) in the disc holder (12), said cutaway portion corresponding to said compartment, and said recess accommodating a disc (50).

8. Drawer according to one of claims 3 to 7, characterised in that the locking members (19, 20, 21) are integrally formed on the blocking lever (16).

9. Drawer according to at least one of claims 1 to 9, characterised in that the blocking lever (16) is loaded in the direction of the base member (3) by means of a compression spring (18).

## Revendications

1. Tiroir pour charger et décharger un disque (50) dans un changeur de disque, en particulier pour disque compact, comprenant
- une partie de fond (3) fixée dans le boîtier (2) du changeur de disque,
- un compartiment de réception (5) déplaçable en entrée et en sortie sur la partie de fond (3) par l'intermédiaire d'un système de verrouillage et de déverrouillage (15), et
- un porte-disque (12) maintenu de façon échangeable dans le compartiment de réception (5) pour recevoir le disque (50),
caractérisé en ce que
le système de verrouillage et de déverrouillage (15) est actionnable sur le compartiment de réception (5) en pivotement sensiblement vertical par la partie de fond (3) et est pourvu d'éléments de crochet (21, 19) venant en prise avec la partie de fond (3) à l'état introduit du compartiment de réception (5) et avec le porte-disque (12) à la sortie du compartiment de réception (5).

2. Tiroir selon la revendication 1, caractérisé en ce que la partie de fond (3) comprend une ouverture (26) dans la partie de bord opposée à la direction de sortie (7) du compartiment de réception (5), dans laquelle s'engage l'élément de crochet correspondant (21) à l'état introduit du compartiment de réception (5).

3. Tiroir selon les revendications 1 et 2, caractérisé en ce que le système de verrouillage et de déverrouillage (15) comprend sur le côté inférieur du compartiment de réception (5) un levier de blocage (16) mobile sur un axe de pivotement (17) monté perpendiculairement à la direction de sortie (7) de ce compartiment.

4. Tiroir selon la revendication 3, caractérisé en ce que le levier de blocage (16) comprend sur son côté supérieur l'élément de crochet (19) associé au porte-disque (12), cet élément de crochet étant orienté vers le haut et s'engageant à la sortie du compartiment de réception (5) sur les parties de bord (22, 23) du compartiment de réception (5) et du porte-disque (12) opposées à la direction de sortie (7).

5. Tiroir selon les revendications 3 et 4, caractérisé en ce que le levier de blocage (16) comprend sur son côté inférieur l'élément de crochet (21) associé à l'ouverture de la partie de fond, cet élément de crochet étant orienté à l'opposé de l'élément de crochet (19) orienté vers le haut et ayant une forme conique allant en se rétrécissant, l'élément de crochet (21) étant en prise avec l'ouverture (26) de la partie de fond (3) à l'état introduit du compartiment de réception (5) et, à la sortie du compartiment de réception (5), glissant d'abord hors de l'ouverture (26) et ensuite le long de la partie de fond (3).

6. Tiroir selon l'une des revendications 3 à 5, caractérisé en ce que le levier de blocage (16) comprend sur son côté supérieur un autre élément de crochet (20) orienté vers le haut, disposé dans la direction de sortie (7) du compartiment (5) et voisin de l'élément de crochet (19) qui est associé au porte-disque (12), cet autre élément de crochet (20) étant associé au disque (50) dans le porte-disque (12).

7. Tiroir selon la revendication 6, caractérisé en ce que l'autre élément de crochet (20) vient à la sortie du compartiment de réception (5) en prise avec une ouverture correspondante (24) du compartiment de réception (5) et avec une cavité correspondante (25) du bord d'un renfoncement (14) recevant un disque (50) dans le porte-disque (12).

8. Tiroir selon l'une des revendications 3 à 7, caractérisé en ce que les éléments de crochet (19, 20, 21) sont formés d'une pièce avec le levier de blocage (16).

9. Tiroir selon au moins l'une des revendications 1 à 9, caractérisé en ce que le levier de blocage (16) est chargé par un ressort de pression (18) dans la direction de la partie de fond (3).
